# EUROPEAN PATENT SPECIFICATION

(11) **EP 0 402 840 B1**
(45) Date of publication and mention of the grant of the patent: **29.09.1993**
(21) Application number: 90111041.1
(22) Date of filing: 12.06.1990
(51) Int. Cl.: B23H 1/02, B23H 7/04

(54) **Method and apparatus for non-contact machining with dynamic feedback control**
Verfahren und Vorrichtung zur berührungsfreien Bearbeitung mittels dynamischer Prozesssteuerung
Procédé et dispositif pour l'usinage sans contact au moyen d'une commande de processus industriel dynamique

(30) Priority: 13.06.1989 US 365747
(43) Date of publication of application: 19.12.1990
(73) Proprietor: RAYCON CORPORATION, Ann Arbor, Michigan 48104 (US)
(72) Inventor: Bond, Robert D., Michigan 48 175 (US); Denham, Thomas E., Michigan 48 170 (US)
(74) Representative: Hoeger, Stellrecht & Partner

(56) References cited:
- US-A- 4 725 705

## Description

This invention relates to a method of non-contact workpiece machining to provide a plurality of features of each machined workpiece with a specified combined size within predetermined tolerances, the machining being determined by plural parameters at least one of which is adjustable in compliance with a feed-back signal obtained by comparison between a reference value and a measurement value said method.
Further, the invention relates to the use of a corresponding assembly for carrying out said method.

More particularly, this invention relates to a method and apparatus for machining multiple parts or workpieces with substantially uniform accuracy.

In many applications, non-contact machining is used for the mass production of parts which must be machined to close tolerances. There are several factors which affect the repeatability of accuracy of machining by the non-contact process. Non-contact machining commonly includes the use of electric discharge (EMD), lasers, or electron beam. In the EDM process, factors which affect the repeatability of accuracy include the process parameters of electrode size, spark energy, spark current, gap length and gap voltage. For example, when the EDM process is used to machine a small hole through a thin plate, the variation in diameter of the wire electrode over a large number of parts may result in many parts being out of tolerance unless special measures are taken. Also, mechanical wear in the fixturing system will result in variation in hole diameters. Even though such variations may be on the order to 0,00254 mm [one ten thousandths inch], they nevertheless adversely affect the accuracy of the finished part. In the case of an orifice plate for fuel injectors, for example, the specified tolerance is 1% but the electrode wire commercially available has a tolerance of two percent. Thus, the desired accuracy can not be achieved uniformly by conventional practice.

Accordingly, there is a need for obtaining improved uniformity and accuracy by the non-contact process. Further, it should not be achieved by depending upon stringent control of the various parameters to precisely constant values. Instead, as a practical matter, the improved accuracy must be achieved while tolerating variations with time in certain operating parameters of the EDM process.

US-A-4,725,705, discloses a method and apparatus of the general type indicated at the outset for electric discharge machining with adaptive feedback for dimensional control. Such method and apparatus, while suitable for their intended purpose, can be applied to other non-contact machining systems in which a parameter can be adapted to control erosion of a single feature. Furthermore, the '705 patent discloses machining a plurality of workpieces, measuring the hole size, and monitoring the trend of change of the measured flow and adjusting the spark energy based on that trend. However, use of the adjustment after a plurality of parts or even a single part, does not consistently maintain the hole size with the low acceptability limit of 1%.

Proceeding on the basis of the prior art it is the object of this invention to meet the above indicated need for obtaining improved uniformity and accuracy by the non-contact process.

This object according to the invention is accomplished by means of the method according to claim 1 and of the use of an assembly according to claim 11, respectively.

Specifically, the invention includes a method of non-contact machining of the workpiece to provide a feature thereof with a specified size within predetermined tolerances, the feature being devisable such that each portion may be machined independently of the others, the machining being of the type wherein the workpiece is eroded by an intermittent discharge and eroding being determined by plural parameters at least one of which is adjustable. The method includes steps of machining a workpiece to form a portion of the feature, the feature having a size which varies with the an adjustable parameter, measuring the portion of the feature machined on the workpiece to obtain a measurement value which represents the feature, analyzing the measurement value of the machined portion of the feature to determine the theoretical size of the remaining feature necessary to be machined so that the size of the hole feature is within a predetermined tolerance, adjusting an adjustable parameter to machine the remainder of the feature to the theoretical size, and machining the workpiece to form the remainder of the features of the workpiece.

Further included is the use of an assembly for non-contact machining to provide a plurality of features with a specified combined size in a workpiece. The assembly comprises machining means for machining first and second features on a workpiece, the features having a size which varies with an adjustable parameter; measurement means for measuring the size of the first feature and the combined size of the first and second features on the workpiece and producing a first measurement signal and combined measurement signal, respectively; and controller means for receiving and analyzing the first measurement signal and for producing the adjustable parameter for machining the second feature by analyzing the first measurement signal to determine an extrapolated size of the second feature necessary to be machined so that the combined size of the first and second features is within a predetermined tolerance.

The advantages of the invention include maintaining the size of the feature to within small tolerances or acceptability limits by utilizing dynamic feedback and adjustment of the adjustable parameter before completing the workpiece. Furthermore, the blank workpieces are not manufactured to extremely close tolerances, therefore, the invention compensates for variations in individual workpieces.

Other advantages of the present invention will be readily appreciated as the same becomes better understood by reference to the following detailed description when considered in connection with the accompanying drawings wherein:
Figure 1 is a perspective view of an example workpiece;
Figure 2 is a perspective view of the tooling;
Figure 3 is a block diagram of the preferred embodiment of the invention;
Figure 4 is a more specific block diagram of the subject invention;
Figures 5a and 5b are a flow chart of the subject invention; and
Figures 6a and 6b are a flow chart of the controller means.

Referring to the drawings, there is shown an illustrative embodiment of the invention in a method and apparatus for non-contact machining using an adaptive control system which adjusts a selected parameter in response to a feedback signal representing workpiece measurement data. A hole or set of holes in the workpiece feature to be machined to a specified flow within 1%, is measured by its fluid flow capacity. It will be appreciated as the description proceeds that the invention may be embodied in may different forms and utilized for many different applications.

The non-contact machining may be accomplished by various types of devices, such as an electric discharge machine (EDM), lasers, electron beam, and the like. The adjustment parameter of EDM is spark energy, commonly referred to as overcut.

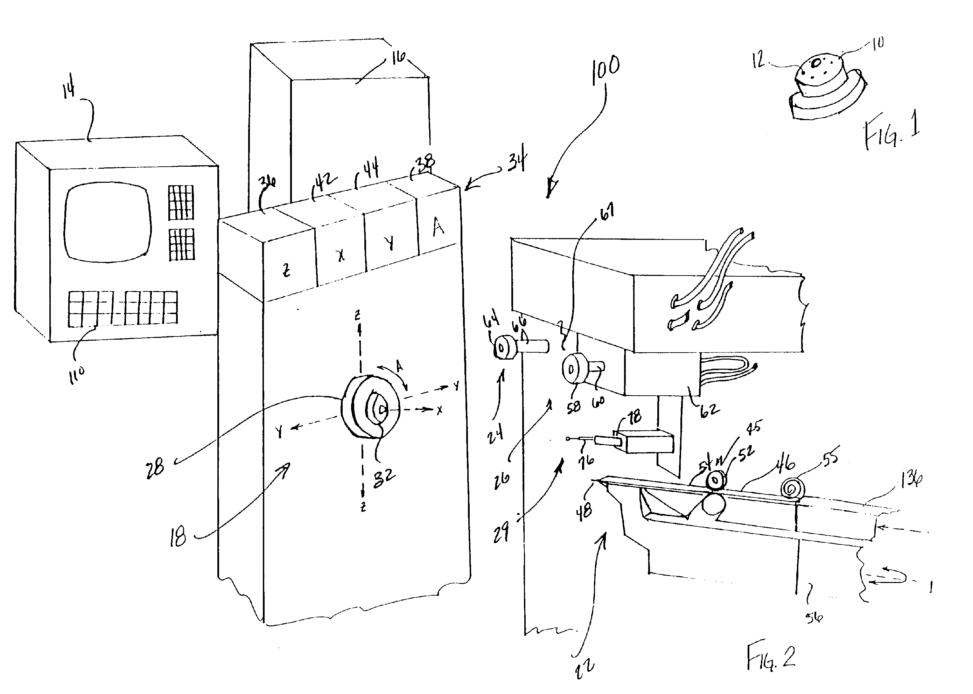

In the illustrative embodiment of the invention to be described, a non-contact machining method and apparatus is utilized for machining a set of small holes in the head of a diesel fuel injector tip as illustrated in Figure 1. It should be understood that various types of workpieces may be machined by the subject apparatus and method, and the invention is not limited to diesel fuel injector tips. Such workpieces or parts are manufactured in high volume using mass production techniques and must be held to very close dimensional tolerances. As shown in Figure 1, the workpiece or part comprises a circular fuel injector tip 10 with a set of six small holes 12, commonly between five and twelve holes, in a circular array surrounding the center of the conical head of the tip 10. In the example workpiece, each of the holes have a specified diameter of 0,1524 mm [six thousandths of an inch] with a tolerance of plus or minus 0,00254 mm [one ten thousandths of an inch]. The set of holes of such size, taking collectively, has a certain fluid flow capacity. Measured flow capacity is used as an index of size. The size or measured flow must be within 1% of the specified size.

The preferred embodiment of the subject invention as illustrated in the Figures, electric discharge machining is utilized. However, the EDM may be simply replaced by a laser or such having an adjustable parameter of energy.

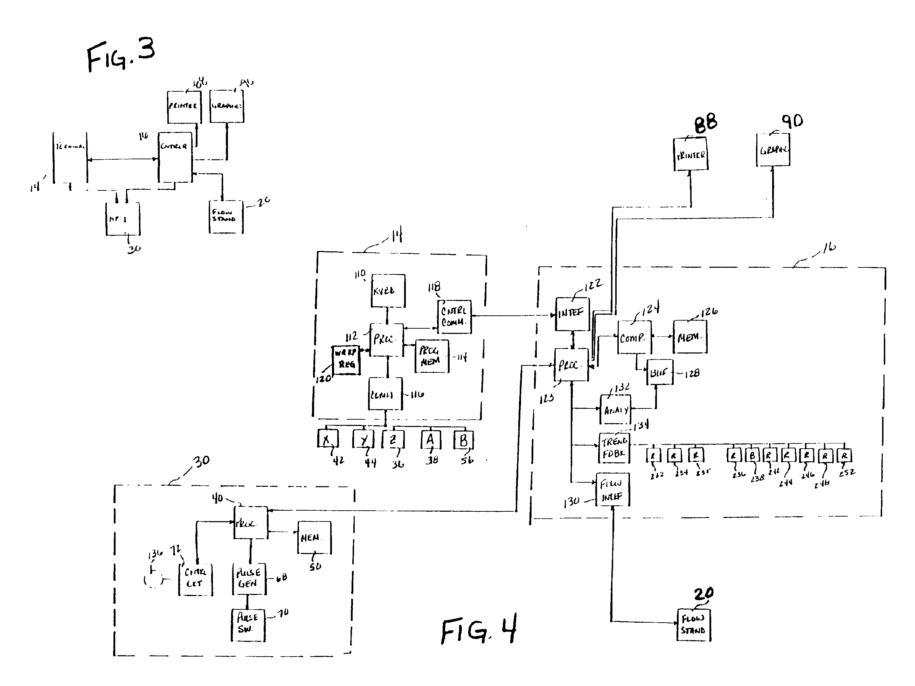

As generally illustrated in Figure 3, the invention comprises terminal means 14 for selecting a workpiece identifier and producing a movement program, controller means 16 for receiving the workpiece identifier and controlling the spark energy based on a flow measurement value through a first set of holes, measuring means 20 for measuring the absolute flow through the holes 12 of the workpiece 10 and machining means 30 for machining or drilling the holes 12 based upon the adjusted overcut from the controller means 16. The machining means 30 comprises an electric discharge machine (EDM). The movement of the workpiece between stations is controlled by the movement program of the terminal means 14 and the spark energy of the EDM is determined by the controller means 16.

The tooling of the subject invention is shown diagrammatically at 100 in Figure 2. In general, the tooling 100 moves the workpiece between an access station 18, offset station 29, a machining station 22, a blow-off station 26, and a test station 24 for the measuring means 20. A workpiece spindle 28 is adapted to move the workpiece through these successive work stations 18, 22, 24, 26, 29.

The tooling 100 includes the spindle 28 supporting a collar 32 for receiving the workpiece 10. The spindle 28 is connected to a servo system 34 which controls the movement of the of the spindle 28 in order to move the workpiece 10 between stations 18, 22, 24, 26, 29. The servo system 34 includes a first motor control 36 for controlling movement of the spindle 28 along the Z or vertical axis, a spin motor control 38 for rotating the workpiece 10 to allow all holes 12 to be drilled as indicated by arrow A, an X axis motor control 42 for moving the spindle 28 along the X axis, and a Y axis motor control 44 for moving the spindle 28 along the Y axis. The motor controls 36, 38, 42, 44 are controlled by the terminal means 14, as described subsequently. The motor controllers 36, 38, 42, 44 allow the workpiece to be moved between the various stations 18, 22, 24, 26, 29.

The access station 18 is a neutral position of the spindle 28 which allows a workpiece 10 to be inserted and removed form the collar 32. The operator inserts a workpiece and starts the program, the spindle 28 moves the workpiece 10 to the offset station.

The offset station 29 measures the offset of the workpiece and collar 32 from a central or ideal position and produces an offset signal to the terminal means which compensates for actual positioning with respect to the remaining stations 18, 22, 24, 26. The offset station 29 includes an electrical probe 76 mounted on a vertical support column 78. The X axis motor control 42 moves the workpiece into contact with the probe 76. which moves the probe 76 into contact and away from the collar 32.

The machining station 22 comprises the electric discharge machine (EDM). The electric discharge machine comprises a head 45 having a carriage 46 for feeding a wire electrode 48 for machining the holes in the workpiece at the machining station 22 on the collar 32. The head 45 may be a laser or electron beam. The wire electrode 48 passes through a refeed mechanism 52 and a wire guide 54 to the workpiece. The refeed mechanism 52 is adapted to advance the electrode wire, which is supplied from a spool 55, relative to the carriage 46 upon retraction of the carriage 46 after each machining operation. The holes 12 are machined in a first and second set, more specifically, the first machining of the workpiece 10 is indexed to drill every other hole 12 comprising a first set of holes, and a latter machining drills the remaining holes 12 or second set of holes. After each machining operation to form one of the holes 12 in the first set, the completed movement of the carriage 46 causes the spindle 28 and collar 32 to be indexed to place the next hole location at the machining station 22. Then the spindle 28 is indexed to the position for machining the last hole of the first portion in the workpiece. Upon completion of the machining of the last hole of a portion in the workpiece, terminal means 14 moves the spindle 28 to transfer the collar 32 and workpiece 10 from the machining station 22 to the blow-off station 26.

The EDM head 45 is connected to a servo controller 56 which moves to angle the carriage 46 between positions parallel and directly pointing toward the center of the workpiece tip and perpendicular to the center axis X of the workpiece along arrow B. In other words, the carriage 46 may move to positions between parallel to the probe 76 and perpendicular thereto. Different fuel injector tips may have different slopes at their heads, which must be compensated for by the servo axis 56 so that the holes 12 are drilled perpendicular to the conical surface of the workpiece 10. The servo axis 56 is controlled by the terminal means 14.

The blow-off station 26 is located above the EDM machine and comprises a connection head 58 for receiving the workpiece 10 and collar 32 in sealing engagement therewith, a pneumatic cylinder 60 connected to the connection head 58 for moving the head 58 into contact and away from the workpiece 10, and a self-contained blow-off stand 62 connected to the workpiece through the head 58 and pneumatic cylinder 60. The blow-off stand 62 functions to blow air through the workpiece 10 in order to remove any water, oil or other residue from the machining operation. Water is generally utilized during machining and oil is utilized during measuring, therefore no residue may remain on the workpiece between the two operations. The X-axis motor 42 moves the workpiece toward the head 58 to a position within the stroke of cylinder 60. The Y and Z axis motors 36, 44 move the workpiece to a position centered horizontally from the head 58.

The test station 24 includes a connection head 64 for receiving the workpiece in sealing engagement therewith and a moveable cylinder 66 for moving the connection head 64 in connection with and away from the workpiece 10. The cylinder 66 is connected to flow stand valve box 67 connected to the measuring means 20 which measures the absolute flow rate of the workpiece 10. After the test operation is completed on the first portion of holes 12, the spindle 28 is moved from the test station 24 to the blow station 26 to remove oil, and then to the machining station 22, which is operated in the manner as described above for the first set of holes. Upon completion of machining the last hole in the workpiece 10 the spindle 28 transfers the workpiece 10 from the machining station 22 to the blow station 26 and then to the test station 24, as previously discussed with the first set of holes.

After the test operation is completed on the second set of holes 12, the workpiece 10 is transferred from the test station 24 to the access station 18 for removal of the part by an operator and sorting thereby dependent upon the displayed measurement, as hereinafter discussed.

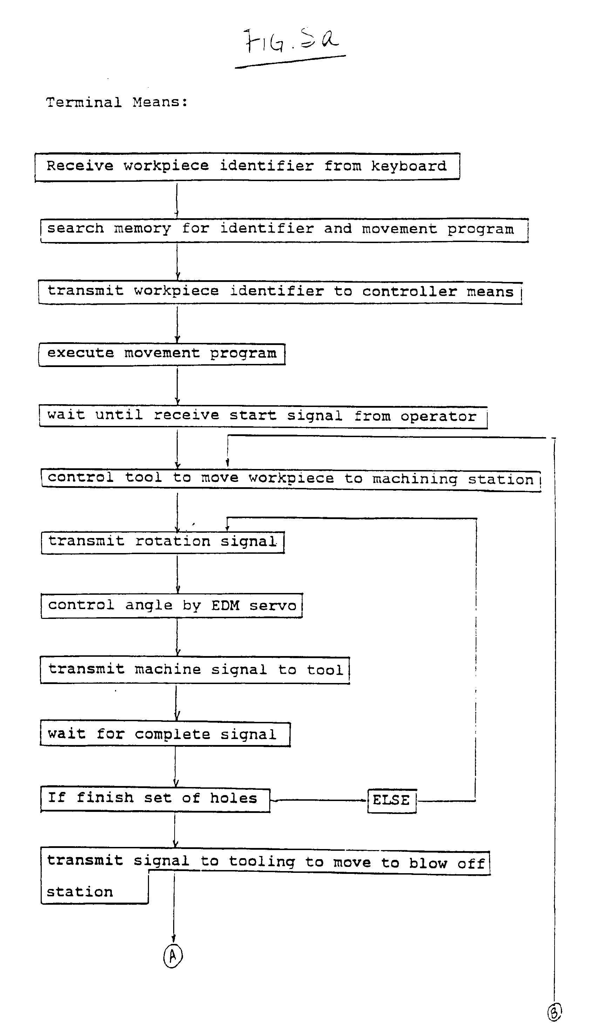

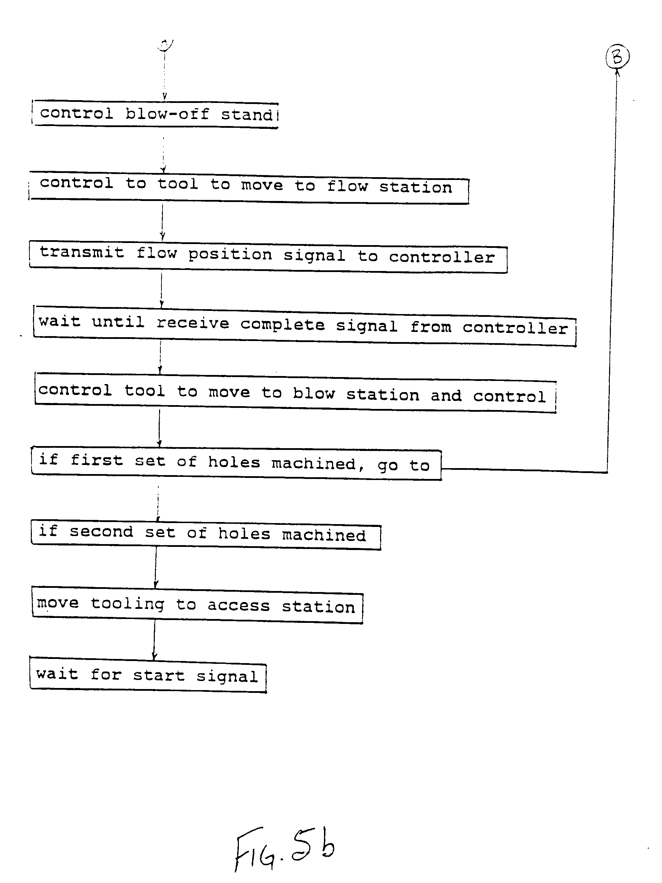

The electronic control system for the EDM described above is shown generally in Figure 3 and more specifically in Figure 4. The electric discharge machine is generally described in U.S. Patent Number 4,725,704, except that the machine is herein utilized as a peripheral device only for machining the workpiece.

The machining means 30 includes processor means 40 for controlling the EDM parameters necessary for machining of the workpiece. Also included is memory means 50 for the storage of data and access by the processor 40. The processor means 40 is generally a microprocessor and the memory means 50 is random access memory (RAM). The machining means 30 includes a pulse generator 68 controlled by the microprocessor 40 for supplying the required electrical pulses for the EDM process. The output of the pulse generator 68 is applied to a pulse switching and conditioning circuit 70 which supplies the power to the gap between the electrode 48 and the workpiece 10 for machining of the workpiece. A servo system moves the carriage 46 for controlled feed and retraction of the electrode 48 in the machining operation. The servo system comprises an EDM servo motor control circuit 72 which operates under the control of the microprocessor 40 to control the energization of the servo motor 136 which is coupled with the carriage 46 to move the carriage 46 toward and away from the workpiece 10 along the C axis. The processor means 40 receives the adjustable parameter and EDM parameters from the controller means 16 and stores them in memory 50. The adjustable parameter may be updated after each machining operation, as subsequently described, and machines the hole in the workpiece in accordance therewith.

The terminal means 14 receives the workpiece identifier and retrieves a movement program for controlling the machine motion. The terminal means 14 is a computer terminal, Allen-Bradley No. 8400, having input keyboard 110, processor 112, program memory 114 and communication link 116 connected to the servo controllers 36, 38, 43, 44, 56, and controller communication 118 to communicate with the controller means 16. The processor 112 receives from the keyboard 110 the part number or workpiece identifier and stores it in a workpiece register 120. The memory 114 has stored therein a listing of part numbers and associated movement programs for controlling the servo controllers 36, 38, 42, 44, 56. The processor 112 compares the inputted part number to the numbers in memory 114 and upon a match, points to the associated movement program in the memory 114 for concurrent execution. Upon execution, the processor 112 utilizes the movement program in memory 114 and controls the movement of the spindle 28 and EDM servo control 56 through communication link 116. The processor 112 receives an input from the workpiece probe 76 indicating proper orientation and positioning of the workpiece, and adjusts any subsequent movement and centering in response thereto. Each part number may have a different movement program for machining the workpieces which is determined and controlled by the terminal means 14.

The measuring means 20 is responsive to the controller means 16 for measuring the size of the feature or holes of the workpiece producing a measurement signal indicating the flow rate value. The measurement means 20 measures the absolute flow through the features of the workpiece. The measurement means 20 is a flow stand 67 by Labeco of Mooresville, Illinois No. 8112. The flow stand 20 flows oil and determines the flow rate therethrough in pounds per hour, however, other mediums may be used. The flow stand 20 forward flushes the workpiece, reverse flushes the workpiece, and then continuously flows the workpiece to obtain a stabilized flow rate value. The flow stand 20 produces the measurement signal representative of the flow rate through the workpiece which is indicative of hole size.

The controller means 16 receives the workpiece identifier and produces EDM variables for the specific workpiece for the machining and adjusts the adjustable variable after the measurement of the first set of drilled holes a transfer function to be described, as the basis of adjustment. Adjustment of the adjustable parameter variable ensures that the total flow of the feature is within the predetermined tolerance of 1% from the specified flow. The controller means 16 is a host computer or cell controller comprising a computer by PROLOG.

The controller means 16 includes terminal interface means 122 interfacing with the terminal means 14 to receive the workpiece identifier. A processor 123 controls the sequences of operation of the terminal means 14, measuring means 20, and EDM processor means 40. Also included is a printer 88 and graphics display monitor 90 for printing and displaying EDM parameters and flow measurements. A comparator means 124 utilizes the workpiece identifier and compares the identifier to memory 126 which stores the part number, transfer function and EDM variables, including the starting adjustable parameter for each workpiece identifier. The comparator 124 obtains the transfer function and variables for the specific workpiece identifier and stores the transfer function into transfer function buffer 128 and transmits the EDM parameters to the processor means 40 of the machining means 30. The interface means 122 receives the position signals from the terminal means 14 which indicates that the terminal means 14 is in position at the proper station 18, 29, 22, 24, 26, and transmits signals to the terminal means 14 to initiate movement of the tooling and machining the holes. The controller means 16 includes flow interface means 130 for producing a flow signal to the measurement means to initiate flow testing, and receiving a signal of the measurement value of the size of the feature. The value is the size of the first set of the features drilled or the size of the whole of the features or holes drilled.

In order to control the EDM process to achieve the desired workpiece hole size, feedback information is developed in the form of absolute flow value as a measure of hole size. The EDM spark energy is utilized as the adjustable parameter for controlling hole size in accordance with the feedback information. There are many factors that influence hole size in the EDM process, some of which can not be controlled in the EDM process, such as electrode dimensions. These factors add a random variation to the feedback signal. In order to stabilize the process, the random variation must be stabilized or the individual random variations must be ignored. In the illustrative embodiment, two feedback schemes are utilized. The first is taking the flow value of a portion of the holes machined, adjusting the overcut, and machining the remaining holes. In the second, the individual random variations are ignored by taking the average of the relative flow values for a group of n workpieces in succession. By comparing successive group averages, feedback information indicative of the trend of change is obtained.

In the first feedback scheme, the measurement value of the first set of the features is received, and the measurement is sent to analyzer means 132. The analyzer means 132 compares the measurement value with the transfer function to determine if a new overcut or spark energy value is necessary to insure that the whole of the feature or workpiece will be within the predetermined tolerances. If a new overcut value is necessary, the new overcut value is transmitted to the machining means 30 establishing the dynamic feedback. The transfer function of each part number is determined using the following procedure. To obtain the transfer function, the operator sets the overcut, drills half the holes, measures the flow and drills the remaining holes at the same overcut and measures the total flow. These measurements are graphed. In the preferred example, a first set of holes should have a flow rate of 68 kg (150 lbs)/hour while the whole of the workpiece should have a flow rate of 136 kg (300 lbs)/hour. However, the curve is not linear. Therefore, during machining if a first measured flow is greater than 68 kg (150 lbs/hour, if the same overcut is used, the 136 kg (300 lbs)/hour will be exceeded. Therefore, the transfer function is used to estimate the decreased overcut necessary to ensure a flow of 136 kg (300 lbs)/hour.

In order to develop a trend feedback for adaptive control of the EDM process, upper and lower adaptive control limits are established for the absolute flow value of the workpiece. If the average of the relative flow value for the last group is below the upper adaptive control limit and above the lower adaptive control limit, no correction of the process is called for and the parameter, i.e., spark energy, is not changed. On the other hand, if the average is above the upper adaptive control limit or below the lower adaptive control limit, need for change of spark energy is indicated. Preferably, another criteria is utilized for making a decision whether to adjust the spark energy. This additional criteria is a value of the average for the last group relative to the average to the next to last group. In particular, if the average absolute flow for the last group is higher than the upper adaptive control limit and if it is not less than the average for the next to last group, the spark energy is decreased. If, on the other hand, the average for the last group is less than the adaptive control lower limit and is not greater than the average to the next to last group, the spark energy is increased. When a change in spark energy is called for, the change is made in gradual increments, an increment at a time, as will be described presently.

In the second feedback scheme, the controller means 16 includes trend feedback means 134 for storing the combined measurement value of a plurality of successive workpieces and monitoring the change in trend of the workpieces, and adjusting the overcut or adjustable variable for the first set of holes to be machined to correct the trend in order to form the workpieces to be within the acceptability limit. In the case that the measurement value is for the whole of the feature, the measured value is compared to an acceptability limit at which point, if the value is greater than the acceptability limit, the controller means 16 transmits the reject signal to the printer 88 and display terminal 90 indicating such is not within limits, alternatively, if the measurement value is within the acceptability limit, the controller means 16 transmits the accept signal to the printer 88 and display terminal 90.

In order to implement the measurement and adaptive control just described, the memory is provided with a set of registers and buffers. As shown in FIG. 4, the memory includes a workpiece flow signal register 232 to store the last flow signal of the workpiece measurement. Similarly, a gauge register 234 stores the specified flow value. When the signals in the register 232 have stabilized, the final signal is stored in the workpiece signal register 232'. A transient limit register 236 stores a predetermined absolute flow value to establish a transient limit. A workpiece acceptance limits register 246 stores the absolute flow values which represents the upper and lower tolerances for the workpiece. The workpiece count buffer 238 stores the relative flow values for the last "n" workpieces which represents the last group. In the illustrative embodiment, "n" is equal to five. The last group register 242 stores the average value of the last group. The next to last group register 244 stores the average value of the next to last group. Registers 248 and 252 store the adaptive control upper limit and lower limit, respectively.

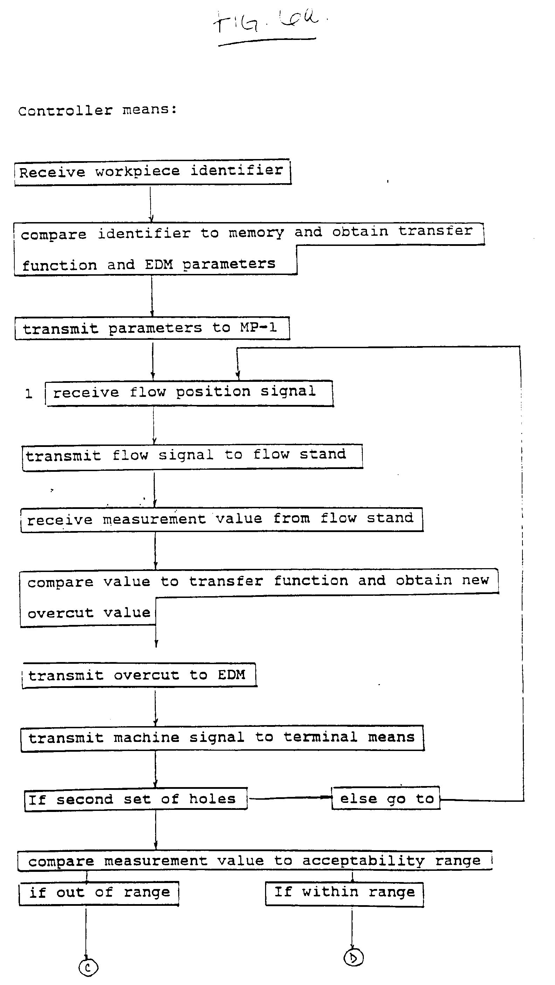

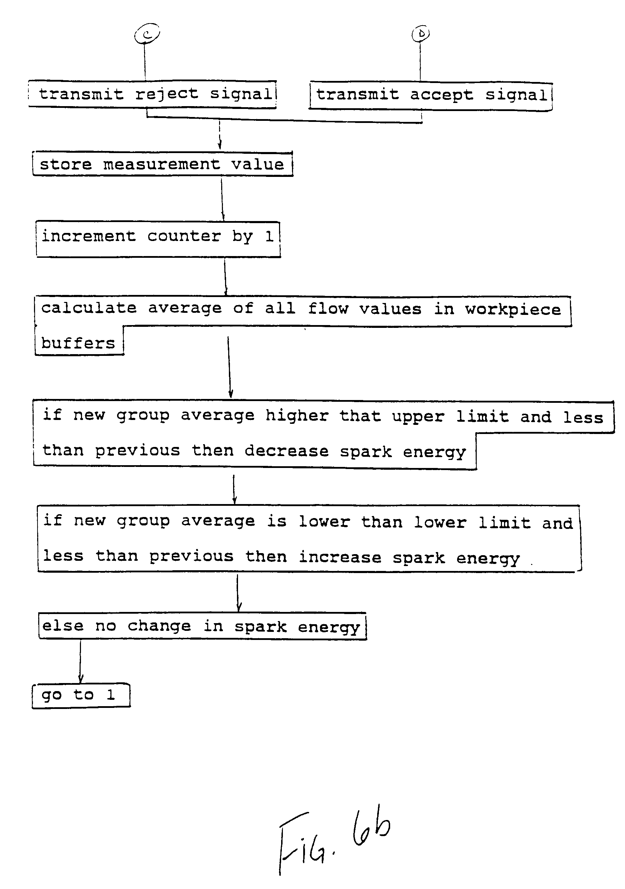

The flow chart for the terminal means 14 and the controller means 16 are generally indicated in Figures 5 and 6, respectively.

As indicated in Figure 5, the controller means 16 is initiated by manual actuation of the keyboard which waits to receive a workpiece identifier. Upon reception of the workpiece identifier, the terminal means 14 searches its memory to obtain the movement program. At the same time, the terminal means 14 transmits the workpiece identifier to the controller means 16 and executes the program. The terminal means 14 then waits for depression of a start key producing a start signal from the operator to initiate machining. Upon reception of the signal, the servo controls 36, 38, 42, 44 transfer the workpiece from the accept station 18 to the offset station 29. The offset signal is received and the terminal means 14 compensates its movement program with the offset. The terminal means 14 then moves the spindle 28 to the machining station 22 and moves the EDM servo 56 to the proper angle orientation. The terminal means 14 transmits a machining signal to the machining means 30 which drills in turn the first hole by moving the servo 136. After machining, the machining means 30 transmits a complete signal to the terminal means 14, which in turn controls the tooling to rotate to workpiece to the next hole position, preferably to the every other hole position, and repositions the EDM servo 56. This will continue until all of the holes of the first portion are complete. The terminal means 14 will move and position the workpiece to the blow-off station 29 and operate the blow-off stand 62 and cylinder 60 for clamping thereto and therefrom after blowing-off. Next, the terminal means 14 will move the workpiece to the test station 24 and clamp the workpiece to the head 64. The terminal means 14 transmit a signal to the controller means 16 that the workpiece is ready for testing and is the first set of holes. The terminal means 14 waits to receive a signal to move the workpiece back to the blow station 26, and then back to the machining station 22. The terminal means 14 will drill the remaining holes based on the adjustable parameter which is directly sent to the machining means 30 from the controller means 16. Upon finishing the drilling of the holes, the terminal means 14 receives a complete signal from the machining means 30. The terminal means 14 will move the workpiece from the machining station 22 to the blow off station 26 and operate the blowing-off, and then move the workpiece to the flow stand. The terminal means 14 transmits a signal indicating in flow position and complete second set of holes. The terminal means 14 waits to receive a complete signal and moves the workpiece to the access station 18. This flow chart is then repeated for each successive workpiece.

The flow chart for the controller means 16 is generally illustrated in Figure 6. The controller means 16 waits for the workpiece identifier, and upon receipt of which compares the workpiece identifier to its memory to obtain the transfer function and the adjustable variable. Upon obtaining the first adjustable variable, the controller means 16 transmits the adjustable variables to the processor means 40 of the machining means 30. The controller means 16 waits for a signal indicating the workpiece is at the flow station 24 and that the first set of holes are drilled. The controller means 16 then transmits a start signal to the flow stand which initiates the flushing and measurement. Upon stabilization of the measuring signal, the controller means 16 receives measurement signal and compares the measurement signal to the transfer function in buffer 128 to obtain an new overcut value for the adjustable parameter. If the received measurement value is greater than the ideal transfer function characteristic, the overcut is decreased to drill a smaller hole, and vise versa. The overcut is transferred to the machining means 30, and the controller means 16 transmits a signal to the terminal means 14 indicating completion of testing and for movement of the tooling to the blow-off station 18 and to complete the machining of the workpieces. The controller means 16 waits for a second signal indicating in position for flowing from the terminal means 14, and that the second set of holes is drilled. The controller means 16 will then transmit the flow signal to the flow stand to initiate measurement, and then receive the measurement signal from the flow stand. Upon reception of the combined measurement signal, the controller means 16 will first compare the measurement signal to the specified level and transmit either a reject signal if the measurement signal is outside of the acceptance limit or transmit an acceptance signal if the measurement signal is within the acceptance limit. Furthermore, the controller means 16 will store the combined measurement signal in memory. The flow chart will then be repeated. After a predetermined number of successive workpieces have been machined, such as five, the controller means 16 will analyze the trend of the stored combined measurement values and generate a starting adjustable variable for the first set of holes to be drilled to the machining means 30. The process is repeated for each new workpiece.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims wherein reference numerals are merely for convenience and are not to be in any way limiting, the invention may be practiced otherwise than as specifically described.

## Claims

1. A method of non-contact workpiece machining to provide a plurality of features (12) of each machined workpiece (10) with a specified combined size within predetermined tolerances, the machining being determined by plural parameters at least one of which is adjustable in compliance with a feed-back signal obtained by comparison between a reference value and a measurement value said method being characterized by the steps of:
machining each workpiece (10) to form a first feature (12), the feature (12) having a size which varies with said adjustable parameter,
measuring the first feature (12) on the workpiece (10) to obtain a first measurement value which represents the size of the first feature (12),
machining a second feature (12) by adjusting the adjustable parameter to machine the second feature (12) to an extrapolated size determined from the first measurement value so that the combined size of the first and second features (12) is within a predetermined tolerance.

2. The method according to claim 1, characterized by storing a transfer function of the ideal measurement values and adjustable parameter for determining the extrapolated size and adjustable parameter.

3. The method according to claim 2, characterized by measuring the combined first and second features (12) on the workpiece (10) to obtain a combined measurement value which represents the size of the combined first and second features (12).

4. The method according to claim 3, characterized by analyzing the combined measurement values of successive workpieces (10) to determine the trend of change of the measured values with respect to the specified size.

5. The method according to claim 4, characterized by including adjusting the adjustable parameter for the first feature (12) after multiple workpieces (10) are machined to cause a succeeding workpiece (10) to be machiened so that the combined size of the first and second features (12) is within the predetermined tolerance.

6. The method according to claim 5, chracterized by including blowing off the workpiece (10) prior to measuring and prior to machining the second feature (12).

7. The method according to claim 6, wherein the feature is a workpiece hole (12) in the workpiece (10), characterized by including comparing the fluid flow capacity of the workpiece hole (12) with a theoretical transfer function of the flow and value of the adjustable parameter.

8. The method according to claim 8, characterized by including rejecting a workpiece (10) when the measurement value thereof exceeds an acceptability limit and eliminating from the computing of the average of the measurement values thereof when it exceeds a transient limit which is greater than the acceptability limit.

9. The method according to claim 9, characterized in that the machining operation is an electrical discharge eroding operation, wherein the adjustable parameter is spark energy.

10. The method according to claim 8, characterized in that the machining operation is a laser eroding operation.

11. Using an assembly (100) for non-contact workpiece machining suitable for providing a plurality of features (12) with a specified combined size in each machined workpiece (10), said assembly (100) comprising:
machining means (30) for machining said features (12) on each workpiece (10), the features (12) having a size which varies with a parameter being adjustable in compliance with a feed-back signal obtained by comparison between a reference value and a measuresment signal
measuring means (20) for measuring the combined size of said features (12) on each machined workpiece (10) and for producing that measurement signal and
controller means (16) for receiving and analyzing that measurement signal and for producing the adjustable parameter for the next machining operation in the following manner:
The machining means (30) are operated such as to machine first and second features (12) on each workpiece (10) in the course of subsequent machining operations;
the measuring means (20) are operated so as to measure the size of the first feature (12) after each machining operation for machining said first features (12) and for measuring the combined size of said first features (12) and of said second features (12) produced in the course of each second machining operation on each workpiece (10) so as to produce a first measurement signal and a combined measurement signal, respectively, after completion of that first and second machining operations, respectively, and wherein the controller means (16) are used so as to receive and analyze the first measurement signal and to produce the adjustable parameter for subsequent machining of the second feature (12) by analyzing the first measurement signal to determine an extrapolated size of the second feature (12) necessary to be machined so that the combined size of the first and second features (12) is within a predetermined tolerance.

12. The use according to claim 11 of an assembly, wherein said assembly (100) further comprises terminal means (14) for moving the workpiece (10) between said machining means (30) and said measuring means (20), characterized in that said terminal means (14) are activated in response to said controller means (16).

13. The use according to claim 12 of an assembly, (100) wherein said controller means (16) further includes buffer means (128), characterized in that said buffer means (128) are used for storing a transfer function representative of an ideal measurement value and an adjustable parameter for determining the extrapolated size and adjustable parameter.

14. The use according to claim 13 of an assembly, wherein said controller means (16) further includes analyzer means (132), characterized in that said analyzer means (132) is used for receiving and comparing said first measurement value to said transfer function and extrapolating the second feature size and adjustable parameter for machining said second feature.

15. The use according to claim 14 of an assembly, wherein said assembly (100) further includes blow means (26), characterized in that said blow means (26) are used for receiving and air blowing said workpiece (10) for removing residue thereon.

16. The use according to claim 15 of an assembly, wherein said controller means (16) further includes trend feedback means (134), characterized in that said trend feedback means (134) are used for computing successive groups of combined features an average of said combined measurement values within each group and determining the trend of change among successive groups in the order in which the groups were machined and adjusting the adjustable parameter in a sense which tends to cause succeeding features (12) to be machined to said specified size.

17. The use according to claim 16 of an assembly, wherein said terminal means (14) include input means (110), characterized in that said input means (110) are used for receiving manual input of a workpiece identifier.

18. The use as set forth in claim 17 of an assembly, further characterized by said terminal means (14) including memory means (114) are used for storing a plurality of numbers associated with a plurality of workpiece identifiers and associated workpiece movement programs for moving the workpiece.

19. The use as set forth in claim 18 of an assembly, further characterized by said terminal means (14) including processor means (112) are used for receiving and comparing said workpiece identifier to said number in said memory means (114) to obtain a movement program for an identified workpiece.

20. The use as set forth in claim 19 of an assembly, further characterized by said controller means (16) including memory means (126) are used for storing a plurality of part numbers and associated transfer functions.

21. The use as set forth in claim 20 of an assembly, further characterized by said controller means (16) including comparator means (124) are used for receiving and comparing said workpiece identifier to said part number in said memory means to obtain the associated transfer function and storing said transfer function in said buffer (128).

22. The use according to claim 21 of an assembly, further characterized by said measuring means (20) being used to provide an absolute flow measurement value representative of the rate of flow through said workpiece.

## Patentansprüche

1. Verfahren zur berührungsfreien maschinellen Werkstückbearbeitung zur Schaffung mehrerer (Merkmale) Elemente (12) jedes bearbeiteten Werkstücks (10) mit einer vorgegebenen kombinierten Größe innerhalb vorgegebener Toleranzen, bei dem die maschinelle Bearbeitung durch mehrere Parameter bestimmt wird, von denen mindestens einer in Abhängigkeit von einem Rückkopplungssignal einstellbar ist, welches durch Vergleich zwischen einem Bezugswert und einem Meßwert erhalten wird, wobei das Verfahren durch die (folgenden) Schritte gekennzeichnet ist:
jedes Werkstück (10) wird maschinell bearbeitet, um ein erstes Element (12) herzustellen, wobei dieses Element (12) eine Größe hat, die sich in Abhängigkeit von dem einstellbaren Parameter ändert;
das erste Element (12) an dem Werkstück (10) wird gemessen, um einen ersten Meßwert zu erhalten, der die Größe des ersten Elements (12) darstellt;
ein zweites Element (12) wird maschinell hergestellt, indem der einstellbare Parameter derart eingestellt wird,
daß die maschinelle Herstellung des zweiten Elements (12) mit einer extrapolierten Größe erfolgt, die anhand des ersten Meßwerts derart bestimmt wird, daß die kombinierte Größe des ersten und des zweiten Elements (12) innerhalb eines vorgegebenen Toleranzbereichs liegt.

2. Verfahren nach Anspruch 1, dadurch gekennzeichnet, daß eine Übertragungsfunktion der idealen Meßwerte und des einstellbaren Parametes zum Bestimmen der extrapolierten Größe und des einstellbaren Parameters gespeichert werden.

3. Verfahren nach Anspruch 2, dadurch gekennzeichnet, daß die Kombination von erstem und zweiten Element (12) an dem Werkstück (10) gemessen wird, um einen Kombinationsmeßwert zu erhalten, der die Größe der Kombination des ersten und des zweiten Elementes (12) darstellt.

4. Verfahren nach Anspruch 3, dadurch gekennzeichnet, daß die Kombinationsmeßwerte für aufeinanderfolgende Werkstücke (10) analysiert werden, um die Tendenz der Änderung der Meßwerte bezüglich der vorgegebenen Größe zu ermitteln.

5. Verfahren nach Anspruch 4, dadurch gekennzeichnet, daß es das Einstellen des einstellbaren Parameters für das erste Element (12) nach der maschinellen Bearbeitung mehrerer Werkstücke (10) in der Weise umfaßt, daß eine maschinelle Bearbeitung eines nachfolgenden Werkstücks (10) in der Weise erfolgt, daß die kombinierte Größe des ersten und des zweiten Elements (12) innerhalb des vorgegebenen Toleranzbereichs liegt.

6. Verfahren nach Anspruch 5, dadurch gekennzeichnet, daß es das Ausblasen des Werkstücks (10) vor dem Messen und vor der maschinellen Herstellung des zweiten Elements (12) umfaßt.

7. Verfahren nach Anspruch 6, bei dem das Element eine Werkstücköffnung (12) in dem Werkstück (10) ist, dadurch gekennzeichnet, daß es das Vergleichen der Fluidströmungskapazität der Werkstücköffnung (12) mit einer theoretischen Übertragungsfunktion der Strömung und des Wertes des einstellbaren Parameters umfaßt.

8. Verfahren nach Anspruch 1, dadurch gekennzeichnet, daß es das Zurückweisen eines Werkstücks (10) umfaßt, wenn dessen Meßwert einen akzeptierbaren Grenzwert überschreitet sowie das Ausschließen desselben (des Meßwerts) aus der Berechnung des Durchschnitts der Meßwerte, wenn er (der Meßwert) einen Übergangsgrenzwert überschreitet, welcher größer ist als der Grenzwert für die Akzeptierbarkeit.

9. Verfahren nach Anspruch 9, dadurch gekennzeichnet, daß die maschinelle Bearbeitung eine elektrische Funkenerosionsbearbeitung ist, bei der der einstellbare Parameter die Funkenenergie ist.

10. Verfahren nach Anspruch 8, dadurch gekennzeichnet, daß die maschinelle Bearbeitung eine Lasererosionsbearbeitung ist.

11. Verwendung einer Anordnung (100) für eine berührungsfreie maschinelle Werkstückbearbeitung, die geeignet ist, an jedem Werkstück (10) mehrere (Merkmale) Elemente (12) mit einer vorgegebenen kombinierten Größe zu erzeugen, wobei die Anordnung (100) umfaßt:
maschinelle Bearbeitungseinrichtungen (30) zum maschinellen Bearbeiten der Elemente (12) an jedem Werkstück (10), wobei die Elemente (12) eine Größe haben, die sich mit einem Parameter ändert, der in Abhängigkeit von einem Rückkopplungssignal einstellbar ist, welches durch Vergleich zwischen einem Bezugswert und einem Meßsignal erhalten wird,
Meßeinrichtungen (20) zum Messen der kombinierten Größe der Elemente an jedem bearbeiteten Werkstück (10) und zum Erzeugen dieses Meßsignals und
Steuer- bzw. Regeleinrichtungen (16) zum Empfangen und Analysieren dieses Meßsignals und zum Erzeugen des einstellbaren Parameters für den nächsten maschinellen Bearbeitungsvorgang in der folgenden Weise:
die Bearbeitungseinrichtungen (30) werden derart betätigt, daß sie im Zuge aufeinanderfolgender maschineller Bearbeitungsvorgänge das erste und das zweite Element (12) an jedem Werkstück maschinell bearbeiten;
die Meßeinrichtungen (20) werden derart betrieben, daß die Größe des ersten Elements (12) nach jedem Bearbeitungsvorgang zum maschinellen Herstellen der ersten Elemente (12) gemessen wird und daß die kombinierte Größe der ersten Elemente (12) und der zweiten Elemente (12), die im Verlauf einer zweiten maschinellen Bearbeitung an jedem Werkstück (10) erzeugt wurden, gemessen werden, um ein erstes Meßsignal bzw. nach der Beendigung des ersten und des zweiten maschinellen Bearbeitungsvorganges das kombinierte Meßsignal zu erzeugen und wobei die Steuer- bzw. Regeleinrichtungen (16) benutzt werden, um das erste Meßsignal zu empfangen und zu analysieren und den einstellbaren Parameter für die anschließende maschinelle Herstellung des zweiten Elementes (12) durch Analysieren des ersten Meßsignals zu erzeugen, um eine extrapolierte Größe des zweiten Elements (12) zu bestimmen, die maschinell hergestellt werden muß, damit die kombinierte Größe des ersten und des zweiten Elementes (12) innerhalb eines vorgegebenen Toleranzbereiches liegt.

12. Verwendung nach Anspruch 1 mit einer Anordnung, bei der diese Anordnung (100) ferner eine (Rechner-)Terminaleinrichtung (14) umfaßt, um das Werkstück (10) zwischen den Einrichtungen (30) zur maschinellen Bearbeitung und den Meßeinrichtungen zu bewegen, dadurch gekennzeichnet, daß die Terminaleinrichtung (14) in Abhängigkeit von den Steuer- bzw. Regeleinrichtungen (16) aktiviert wird.

13. Verwendung nach Anspruch 12 bei einer Anordnung, bei der die Steuer- bzw. Regeleinrichtungen (16) ferner Puffereinrichtungen (128) umfassen, dadurch gekennzeichnet, daß die Puffereinrichtungen (128) verwendet werden, um eine Übertragungsfunktion zu speichern, die für einen idealen Meßwert representativ ist, sowie einen einstellbaren Parameter zum Bestimmen der extrapolierten Größe und des einstellbaren Parameters.

14. Verwendung nach Anspruch 13 bei einer Anordnung, bei der die Steuer- bzw. Regeleinrichtungen (16) ferner Analysiereinrichtungen (132) umfassen, dadurch gekennzeichnet, daß die Analysiereinrichtungen (132) dazu verwendet werden, den ersten Meßwert zu empfangen und mit der Übertragungsfunktion zu vergleichen, und die Größe des zweiten Elementes zu extrapolieren sowie den einstellbaren Parameter für die maschinelle Bearbeitung des zweiten Elementes.

15. Die Verwendung nach Anspruch 14 bei einer Anordnung, bei der diese Anordnung (100) ferner Blaseinrichtungen (26) umfaßt, dadurch gekennzeichnet, daß diese Blaseinrichtungen (26) verwendet werden, um das Werkstück (10) aufzunehmen und mit Luft auszublasen, um daran befindliche Rückstände zu entfernen.

16. Verwendung nach Anspruch 15 bei einer Anordnung, bei der die Steuer- bzw. Regeleinrichtungen (16) ferner Trend-Rückkopplungseinrichtungen (134) umfassen, dadurch gekennzeichnet, daß die Trend-Rückkopplungseinrichtungen (134) verwendet werden, um für aufeinanderfolgende Gruppen von kombinierten Elementen einen Mittelwert der kombinierten Meßwerte innerhalb jeder Gruppe zu berechnen und den Trend der Änderung bei aufeinanderfolgenden Gruppen in der Reihenfolge zu bestimmen, in der die Gruppen maschinell bearbeitet wurden und um den einstellbaren Parameter in dem Sinne einzustellen, welcher die Tendenz hat, zu bewirken, daß nachfolgende Elemente maschinell auf die vorgegebene Größe bearbeitet werden.

17. Verwendung nach Anspruch 16 bei einer Anordnung, bei der die Terminaleinrichtungen (14) Eingabeeinrichtungen (110) umfassen, dadurch gekennzeichnet, daß die Eingabeeinrichtungen (110) verwendet werden, um eine manuelle Eingabe von einer Werkstück-Identifikationseinrichtungen zu empfangen.

18. Verwendung nach Anspruch 17 bei einer Anordnung, die weiterhin dadurch gekennzeichnet ist, daß die Terminaleinrichtungen (14) Speichereinrichtungen (114) umfassen und benutzt werden, um mehrere Zahlen zu speichern, die mit einer Anzahl von Werkstück-Identifikationen verknüpft sind, sowie zugeordnete Werkstückbewegungsprogramme zum Bewegen der Werkstücke.

19. Verwendung nach Anspruch 18 bei einer Anordnung, welche weiterhin dadurch gekennzeichnet, ist, daß die Terminaleinrichtungen (14) Prozessoreinrichtungen (112) umfassen, die dazu verwendet werden, die Werkstück-Identifikatoren zu empfangen und mit der Zahl in den Speichereinrichtungen (114) zu vergleichen, um ein Bewegungs programm für ein identifiziertes Werkstück zu erhalten.

20. Verwendung nach Anspruch 19 bei einer Anordnung, welche ferner dadurch gekennzeichnet ist, daß die Steuer- bzw. Regeleinrichtungen (16) Speichereinrichtungen (126) umfassen, die dazu verwendet werden, mehrere Teile- nummern und zugeordnete Übertragungsfunktionen zu speichern.

21. Verwendung nach Anspruch 20 bei einer Anordnung, welche ferner dadurch gekennzeichnet ist, daß die Steuer- bzw. Regeleinrichtungen (16) Komparatoreinrichtungen (124) umfassen, die dazu verwendet werden, einen Werkstück-Identifikator zu empfangen und mit der Teilenummer in den Speichereinrichtungen zu vergleichen, um die zugeordnete Übertragungsfunktion zu erhalten und diese Übertragungsfunktion in dem Puffer (128) zu speichern.

22. Verwendung nach Anspruch 21 bei einer Anordnung, die ferner dadurch gekennzeichnet ist, daß die Meßeinrichtungen (20) verwendet werden, um einen absoluten Durchflußmeßwert zu liefern, der representativ für die Durchflußrate durch das Werkstück ist.

## Revendications

1. Procédé d'usinage d'une pièce à usiner sans contact afin de produire une pluralité de caractéristiques (12) de chaque pièce à usiner (10) moyennant une dimension combinée spécifiée tombant des tolérances prédéterminées, l'usinage étant déterminé par plusieurs paramètres dont au moins un est réglable conformément à un signal de retour obtenu au moyen d'une comparaison entre une valeur de référence et une valeur de mesure, ledit procédé étant caractérisé par les étapes de :
usinage de chaque pièce à usiner (10) afin de former une première caractéristique (12), la caractéristique (12) présentant une dimension qui varie avec ledit paramètre réglable ;
mesure de la première caractéristique (12) sur la pièce à usiner (10) afin d'obtenir une première valeur de mesure qui représente la dimension de la première caractéristique (12)
usinage d'une seconde caractéristique (12) en réglant le paramètre réglable afin d'usiner la seconde caractéristique (12) jusqu'à une dimension extrapolée déterminée à partir de la première valeur de mesure de telle sorte que la dimension combinée des première et seconde caractéristiques (12) tombe dans une tolérance prédéterminée.

2. Procédé selon la revendication 1, caractérisé par le stockage d'une fonction de transfert des valeurs de mesure idéales et du paramètre réglable pour déterminer la dimension extrapolée et le paramètre réglable.

3. Procédé selon la revendication 2, caractérisé par la mesure des première et seconde caractéristiques combinées (12) sur la pièce à usiner (10) afin d'obtenir une valeur de mesure combinée qui représente la dimension des première et seconde caractéristiques combinées (12).

4. Procédé selon la revendication 3, caractérisé par l'analyse des valeurs de mesure combinées des pièces à usiner successives (10) afin de déterminer la tendance de la variation des valeurs mesurées par rapport à la dimension spécifiée.

5. Procédé selon la revendication 4, caractérisé en ce qu'il inclut un réglage du paramètre réglable pour la première caractéristique (12) après que de multiples pièces à usiner (10) sont usinées pour faire en sorte qu'une pièce à usiner suivante (10) soit usinée de telle sorte que la dimension combinée des première et seconde caractéristiques (12) tombe dans une tolérance prédéterminée.

6. Procédé selon la revendication 5, caractérisé en ce qu'il inclut un nettoyage par soufflage de la pièce à usiner (10) avant mesure et avant d'usiner la seconde caractéristique (12).

7. Procédé selon la revendication 6, dans lequel la caractéristique est un trou de pièce à usiner (12) ménagé dans la pièce à usiner (10), caractérisé en ce qu'il inclut une comparaison de la capacité d'écoulement de fluide du trou de pièce à usiner (12) à une fonction de transfert théorique de l'écoulement et de la valeur du paramètre réglable.

8. Procédé selon la revendication 7, caractérisé en ce qu'il inclut la mise au rebut d'une pièce à usiner (10) lorsque sa valeur de mesure excède une limite d'acceptabilité ainsi que l'élimination du calcul de la moyenne de ses valeurs de mesure lorsqu'elle excède une limite transitoire qui est supérieure à la limite d'acceptabilité.

9. Procédé selon la revendication 8, caractérisé en ce que l'opération d'usinage est une opération d'érosion par décharges électriques dans laquelle le paramètre réglable est l'énergie des étincelles.

10. Procédé selon la revendication 8, caractérisé en ce que l'opération d'usinage est une opération d'érosion laser.

11. Utilisation d'un assemblage (100) pour usiner une pièce à usiner sans contact, lequel convient pour produire une pluralité de caractéristiques (12) moyennant une dimension combinée spécifiée dans chaque pièce à usiner (10), ledit assemblage (100) comprenant :
un moyen d'usinage (30) pour usiner lesdites caractéristiques (12) sur chaque pièce à usiner (10), les caractéristiques (12) présentant une dimension qui varie en fonction d'un paramètre qui est réglable conformément à un signal de retour obtenu au moyen d'une comparaison entre une valeur de référence et un signal de mesure ;
un moyen de mesure (20) pour mesurer la dimension combinée desdites caractéristiques (12) sur chaque pièce à usiner usinée et pour produire ce signal de mesure ; et
un moyen de contrôleur (6) pour recevoir et analyser ce signal de mesure pour produire le paramètre réglable pour l'opération d'usinage suivante de la manière suivante :
un moyen d'usinage (30) est actionné de manière à usiner les première et seconde caractéristiques (12) sur chaque pièce à usiner (10) au cours des opérations d'usinage suivantes ;
le moyen de mesure (20) est actionné de manière à mesurer la dimension de la première caractéristique (12) après chaque opération d'usinage pour usiner lesdites premières caractéristiques (12) et pour mesurer la dimension combinée desdites premières caractéristiques (12) et desdites secondes caractéristiques (12) produites au cours de chaque seconde opération d'usinage sur chaque pièce à usiner (10) de manière à produire respectivement un premier signal de mesure et un signal de mesure combiné après la fin de ces première et seconde opérations d'usinage respectives et dans lequel le moyen de contrôleur (16) est utilisé de manière à recevoir et à analyser le premier signal de mesure et de manière à produire le paramètre réglable pour un usinage suivant de la seconde caractéristique (12) en analysant le premier signal de mesure afin de déterminer une dimension extrapolée de la seconde caractéristique (12) qu'il est nécessaire d'usiner de telle sorte que la dimension combinée des première et seconde caractéristiques (12) tombe dans une tolérance prédéterminée.

12. Utilisation selon la revendication 11 d'un assemblage, dans lequel ledit assemblage (100) comprend en outre un moyen de terminal (14) pour déplacer la pièce à usiner (10) entre ledit moyen d'usinage (30) et ledit moyen de mesure (20), caractérisée en ce que ledit moyen de terminal (14) est activé en réponse audit moyen de contrôleur (16).

13. Utilisation selon la revendication 12 d'un assemblage (100), dans lequel ledit moyen de contrôleur (16) inclut en outre un moyen de tampon (128), caractérisée en ce que ledit moyen de tampon (128) est utilisé pour stocker une fonction de transfert représentative d'une valeur de mesure idéale et d'un paramètre réglable pour déterminer la dimension extrapolée et le paramètre réglable.

14. Utilisation selon la revendication 13 d'un assemblage, dans lequel ledit moyen de contrôleur (16) inclut en outre un moyen d'analyseur (132), caractérisée en ce que ledit moyen d'analyseur (132) est utilisé pour recevoir et comparer ladite première valeur de mesure à ladite fonction de transfert et pour extrapoler la seconde dimension de mesure et le paramètre réglable pour usiner ladite seconde caractéristique.

15. Utilisation selon la revendication 14 d'un assemblage, dans lequel ledit assemblage (100) inclut en outre un moyen de soufflerie (26), caractérisée en ce que ledit moyen de soufflerie (26) est utilisé pour recevoir ladite pièce à usiner (10) et pour souffler de l'air dessus afin d'ôter tout résidu présent dessus.

16. Utilisation selon la revendication 15 d'un assemblage, dans lequel ledit moyen de contrôleur (16) inclut en outre un moyen de retour de tendance (134), caractérisée en ce que ledit moyen de retour de tendance (134) est utilisé pour calculer des groupes successifs de caractéristiques combinées, une moyenne desdites valeurs de meure combinées dans chaque groupe et pour déterminer la tendance d'une variation parmi les groupes successifs suivant l'ordre dans lequel les groupes sont usinés et pour régler le paramètre réglable dans un sens qui tend à provoquer l'usinage de caractéristiques suivantes (12) selon ladite dimension spécifiée.

17. Utilisation selon la revendication 16 d'un assemblage, dans lequel ledit moyen de terminal (14) inclut un moyen d'entrée (110), caractérisée en ce que ledit moyen d'entrée (110) est utilisé pour recevoir une entrée manuelle d'un identificateur de pièce à usiner (18).

18. Utilisation selon la revendication 17 d'un assemblage, caractérisée en outre en ce que ledit moyen de terminal (14) incluant un moyen de mémoire (114) est utilisé pour stocker une pluralité de nombres associés à une pluralité d'identificateurs de pièce à usiner et associés à des programmes de déplacement de pièce à usiner pour déplacer la pièce à usiner.

19. Utilisation selon la revendication 18 d'un assemblage, caractérisée en outre en ce que ledit moyen de terminal (14) incluant un moyen de processeur (112) est utilisé pour recevoir et comparer ledit identificateur de pièce à usiner audit nombre contenu dans ledit moyen de mémoire (114) afin d'obtenir un programme de déplacement pour une pièce à usiner identifiée.

20. Utilisation selon la revendication 19 d'un assemblage, caractérisée en outre en ce que ledit moyen de contrôleur (16) qui inclut un moyen de mémoire (126) est utilisé pour stocker une pluralité de numéros de partie et de fonctions de transfert associés.

21. Utilisation selon la revendication 20 d'un assemblage, caractérisée en outre en ce que ledit moyen de contrôleur (16) incluant un moyen de comparateur (124) est utilisé pour recevoir et comparer ledit identificateur de pièce à usiner audit numéro de partie contenu dans ledit moyen de mémoire pour obtenir la fonction de transfert associée et pour stocker ladite fonction de transfert dans ledit tampon (128).

22. Utilisation selon la revendication 21 d'un assemblage, caractérisée en outre en ce que ledit moyen de mesure (20) est utilisé pour produire une valeur de mesure d'écoulement absolue représentative du débit au travers de ladite pièce à usiner.
